# EUROPEAN PATENT APPLICATION

(11) **EP 3 922 585 A1**
(43) Date of publication of application: **15.12.2021**
(21) Application number: 21177679.4
(22) Date of filing: 04.06.2021
(51) Int. Cl.: B65G 17/12, B65G 47/57, B65G 17/32

(54) **ELEVATOR ASSEMBLY**

(30) Priority: 08.06.2020 BE 202005408
(71) Applicant: FT Solutions BV, 2610 Wilrijk (BE)
(72) Inventor: Peeters, Christian, 2550 Kontich (BE); Lemmens, Eddy, 2840 Reet (BE)
(74) Representative: IP HILLS NV

(57) **Abstract**

Elevator assembly for a vial conveyor system wherein the elevator assembly is configured to convey vials from a first level to a second level, the elevator assembly comprising an endless belt configured to move along an at least partially inclined or substantially vertical trajectory.

## Description

### Field of the Invention

The present invention generally relates to an elevator assembly for a vial conveyor system, in particular for pharmaceutical vials, and to a method to elevate vials from a first level to a second level in a vial conveyor system.

### Background of the Invention

Elevator assemblies in conveyor systems are largely known and used and come in a wide variety according to the goods that need to be handled and/or transported. They are for example used in industrial plants to lift goods from a first level, for example a production or handling level, to a higher level, for example to allow people or goods to cross or move underneath the conveyor line or belt. Some goods can be conveyed on inclined surfaces, for example on inclined belt conveyors. This is however not possible for all types of goods, such as for example for vials, flacons, bottles or the like, which cannot remain in position on an inclined surface. In some cases, the products are therefore loaded in holders or containers which can be conveyed more easily, but the transfer in these holders implies the need for additional equipment and results in a loss of time. Alternatively, for this type of goods, a wedge conveyor can be used. A wedge conveyor can come in various shapes, such as a C-shape, or an inverse U-shape, or any other shape known to the person skilled in the art. A wedge conveyor can usually include two parallel endless belts, in between which a product can be wedged or clamped. The product can then be conveyed along a predefined path, including an at least partially inclined or vertical path.

However, for some types of vials, in particular in the pharmaceutical industry, these wedge conveyors lead to a relatively high loss of products, in particular for relatively small vials, which appear to be relatively difficult to grasp. As a result, vials can fall during the conveying by the wedge conveyor. Apart from the loss of the product and the vial, desctruction of the vial can especially be problematic when happening in a clean room, where there are strict limits on air quality. Moreover, in these cleanrooms, dust produced by the functioning of a conveyor system can be an issue. Dust can for example be produced by friction between different elements of the conveyor belt, for example in the case of chain belts, or by friction between the product wedged between the endless belts and the belts. In the case of vials, small bottles, flasks or other types of containers, in glass or plastic, being wedged between the belts, tiny cracks may occur in the glass or plastic. These micro-cracks may produce additional dust or impurities in the air and may hamper safety of the vials themselves. At present, vials in the pharmaceutical industry are generally transported on conveyor systems having plastic chain belts and then elevated by a wedge conveyor, which results in a relatively high level of dust in a clean room in the form of plastic particles and glass particles being liberated due to friction between different elements of the conveyor system. The increasing level of requirements on air purity in clean rooms can thus be relatively difficult to be reached.

It is therefore an aim of the present invention to solve or at least alleviate one or more of the above-mentioned problems. In particular, the invention aims at providing an elevator assembly for a vial conveyor system which can significantly reduce dust production during operation.

### Summary of the Invention

To this aim, according to a first aspect of the invention, there is provided an elevator assembly for a vial conveyor system characterized by the features of claim 1. In particular, the elevator assembly is configured to be part of a vial conveyor system and to convey vials from a first level to a second level. The elevator assembly comprises an endless belt configured to move along an at least partially inclined or substantially vertical trajectory, for example along a U-shaped trajectory or a C-shaped trajectory or any other known trajectory. The endless belt includes a plurality of vial holding recesses, each recess being configured to hold a single vial in a hanging. In this way, the vials can be conveyed individually without touching each other, which can reduce dust production. Since the vials are conveyed in a vial holding recess in a hanging way, there is an improved support of the vials, contrary to wedging vials, which decreases the risk of accidents with falling vials. Additionally, there is no need for an accurate setting and timing of two different cooperating endless belts to arrive at wedging the vials, since the vials can be conveyed by a single endless belt.

A width of the vial holding recesses can preferably be larger than a minimal diameter of the vial and smaller than a maximal diameter of the vial. In this way, the vial holding recess can easily receive the vial without having to force the vial into the recess, and at the same time, the maximal diameter of the vial allows hanging of the vial in the vial holding recess. In other words, the vial holding recess is configured to hold the vial at a bottleneck of the vial. The vial can then rest on an enlargement of the vial above the bottleneck, for example a screw thread for a cap or closure, thus hanging in the vial holding recess. In the absence of wedging the vial, friction between the vial and the vial holding recess can considerably be reduced.

The vial holding recesses can preferably be at a distance of one another, the distance being such that vials hanging in adjacent vial holding recesses remain at a distance of one another in a bend of the endless belt trajectory. When the vials hang in the vial holding recesses, an upper part of the vial protrudes above the endless belt, and a lower part of the vial extends below the endless belt. On a trajectory without change in direction, the vials hanging in the vial holding recesses can remain substantially parallel to each other. However, the trajectory can include bends. The bend can be an upward bend, a downward bend or a bend to the left or the right side or any combination of these. The trajectory of the endless belt can for example among other shapes be substantially U-shaped including four bends: a first bend in which the belt changes from a substantially horizontal trajectory to a substantially vertical trajectory, a second bend in which the belt changes from a substantially vertical trajectory to a substantially horizontal trajectory, and a third bend in which the belt changes back from a substantially horizontal trajectory to a substantially vertical trajectory, and a last bend in which the belt changes back from a substantially vertical trajectory to a substantially horizontal trajectory. In each of the bends, either an upper part of the vials or a lower part of the vials extending above or below the endless belt will be radially extending toward each other but touching of vials can be avoided thanks to a well-chosen distance between the vial holding recesses. At the same time, it is preferred not to have too much distance between two adjacent vial holding recesses to allow a relatively high number of vials to be conveyed by the system.

The elevator assembly can comprise at least two pulleys around which the endless belt is configured to rotate, wherein the pulleys are configured to rotate in a substantially vertical plane. In this way, the endless belt can extend between these at least two pulleys in such a way that there is an upper belt part moving in a first direction and a lower belt part moving in a second direction opposite to the first direction. The elevator assembly can for example be configured to only convey vials in a single direction thus only using one of the upper belt part and the lower belt part. Alternatively, both directions may be used for conveying vials.

It is preferred that the endless belt includes a toothed belt. A toothed belt can be synchronized relatively easily with other belts or assemblies, for example with assemblies supplying the vials. Alternatively, other belt types may be used.

The vial holding recesses can be configured to receive the vials laterally. The vial holding recesses can preferably be located along a lateral side of the endless belt, which can facilitate loading of the elevator, especially from a preceding conveyor belt system on which vials are already being transported in a row.

A side of the endless belt can include at least one pair of sideward protruding arms such that said pair of arms delimit the vial holding recess. This way of creating vial holding recesses can save belt material in between said vial holding recesses. As an example, two-teethed forks can be fixedly attached on top of the endless belt, the two teeth protruding sideward as a pair of arms defining the vial holding recess. Other embodiments are possible as well.

The elevator assembly can preferably comprise a cover configured to enclose the endless belt. The plurality of vial holding recesses may then preferably protrude sideward from the cover. The cover can avoid that dust caused by the rotation of the endless belt can be spread around, which may be important in for example a clean room.

The elevator assembly can further comprise a wedge configured to guide the vials into or out of the vial holding recesses. The wedge is a fairly simple piece to manufacture and can allow a gradual insertion or leaving of the vials into or out of the vial holding recesses. Moreover, a wedge is a passive guiding element which does not need additional actuation or control.

Additionally, or alternatively, the elevator assembly can comprise a star wheel including a plurality of vial guiding recesses configured to guide vials into or out of the vial holding recesses. Such a wheel can be synchronized relatively easily with the endless belt to allow an individual insertion of a vial into one of the vial holding recesses, or a taking out of the vials from the vial holding recesses.

According to a second aspect of the invention, there is provided a method to elevate vials from a first level to a second level in a vial conveyor system as defined in claims 11-14. The method can provide one or more of the above-mentioned advantages.

The present invention will be further elucidated with reference to figures of exemplary embodiments. Corresponding elements are designated with corresponding reference signs.

### Brief Description of the Drawings

Fig. 1a shows a perspective view on a preferred embodiment of an elevator assembly according to a first aspect of the invention;
Fig. 1b is a detailed zoom on part of the preferred embodiment of Fig. 1a;
Fig. 2 shows a top view on an insertion assembly for the elevator assembly shown in Figure 1;
Fig. 3 shows a top view on an exit assembly for the elevator assembly shown in Figure 1.

### Detailed Description of Embodiment(s)

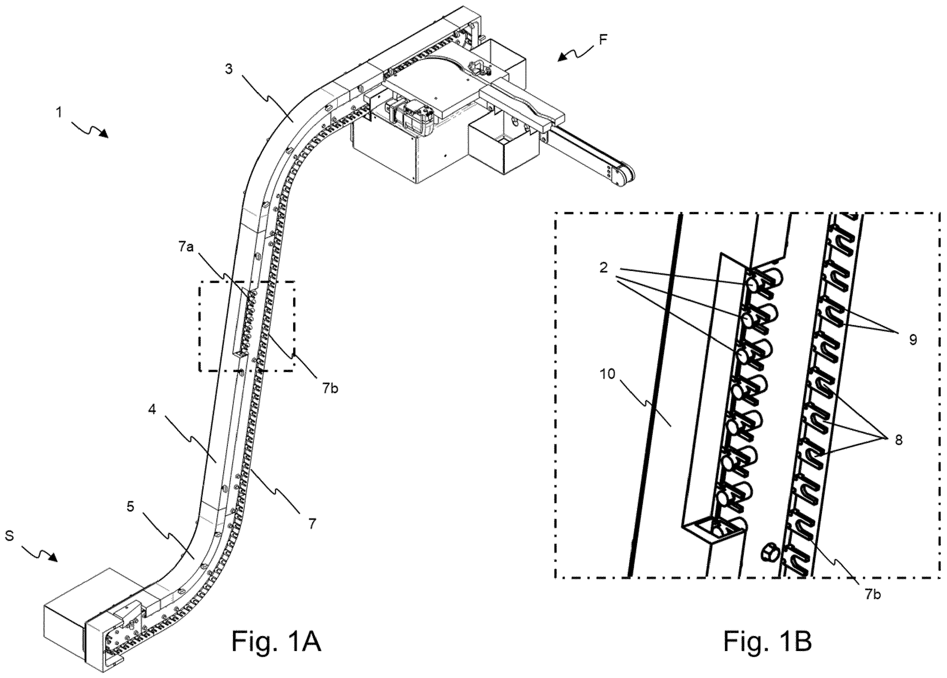

Figure 1a shows a perspective view on a preferred embodiment of an elevator assembly 1 according to a first aspect of the invention. The elevator assembly 1 is configured to convey vials 2 from a first level F to a second level S, for example moving up vials 2 to a higher level or taking down vials to a lower level or any combination thereof. As such, the elevator assembly is configured to be combinable with a vial conveyor system, for example when a passage needs to be created from one side of the vial conveyor system to the other side, or in any other application. The elevator assembly is in particular suitable for pharmaceutical vials, which can be relatively small, can be made in glass or plastic, and which may need a careful treatment to avoid damages to the vials and/or to the content as well as to decrease the risk of dust production. The vials can for example have a content in a range of more or less 2 ml to more or less 30 ml, and have a maximal external diameter included in a range of 10 mm to more or less 60 mm or more or less. The elevator assembly comprises an endless belt 7 configured to move along an at least partially inclined or substantially vertical trajectory between the first level F and the second level S. In the present embodiment the elevator assembly 1 can take vials from a first level F, in which vials are conveyed in a substantially horizontal plane, via a bend 3, a relatively steep descent 4 and another bend 5, to a second level S, in which vials can again be transported in a substantially horizontal plane but at a height under the first level F. The direction of conveying the vials could also be inversed in case vials need to be taken to a higher level. A trajectory of vials in the elevator assembly 1 can also include other shapes, such as for example a rise followed by a descent of the vials. The height can for example be chosen according to the function of the passage 6 created underneath. The elevator assembly can comprise at least two pulleys (not shown) around which the endless belt 7 is configured to rotate by actuation of the pulleys, the pulleys being configured to rotate in a substantially vertical plane. That implies that the endless belt 7 includes an upper part 7a moving in a first direction and a lower part 7b moving in the opposite direction.

Figure 1b is a detailed zoom on part of the preferred embodiment of Figure 1a. Contrary to prior art systems in which vials can be wedged in between two rotating endless belts, the endless belt 7 of the elevator assembly 1 according to the present invention includes a plurality of vial holding recesses 8, each recess 8 being configured to hold a single vial 2 in a hanging way. A width of the vial holding recesses 8 is preferably larger than a minimal diameter of the vial and smaller than a maximal diameter of said vial 2. Vials 2, in particular pharmaceutical vials, can generally have a kind of bottleneck, for example between a container part of the vial and the covering part of the vial. The minimal diameter of the vial can for example be a diameter at the bottleneck of the vial, whereas the maximal diameter of the vial can be above and or below the bottleneck. A width of the vial holding recess 8 can for example be included in a range of more or less 8 mm to more or less 50 mm, for example between substantially 11 mm and more or less 12 mm for a vial having a maximal external diameter of around 16 mm and a minimal external diameter of around 10 mm. So, there is no wedging of the hanging vial 2 in the vial holding recess 8. The vial holding recesses 8 are at a distance of one another, the distance being such that vials 2 hanging in adjacent vial holding recesses 8 remain at a distance of one another in a bend 3, 5 of the endless belt trajectory. Said distance can for example be chosen in function of a radius of the bend 3, 5, and a height of the vial protruding below or above the vial holding recesses 8. The endless belt 7 can include at least one pair, and preferably a plurality, of sideward protruding arms 9 such that said pair of arms delimit the vial holding recess 8. Said pair of arms 9 could also be described as a two-teethed fork protruding sideward from the endless belt 7. The elevator assembly 1 can further comprise a cover 10 configured to enclose the endless belt 7, while the plurality of vial holding recesses 8 protrude sideward from the cover 10. This cover can help decreasing dust production of the elevator assembly 1 in use.

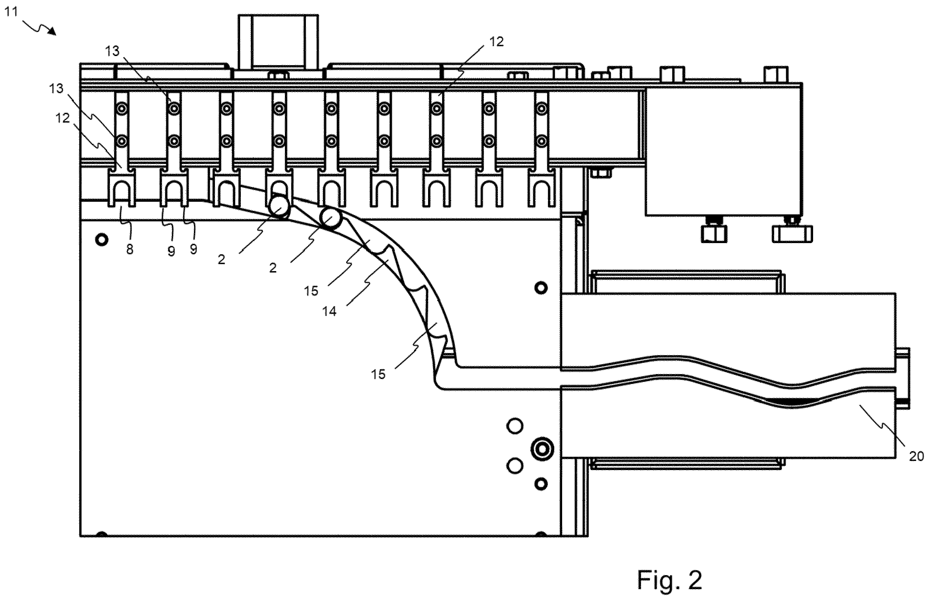

Figure 2 shows a top view on an insertion assembly 11 for the elevator assembly 1 shown in Figure 1a. In Figure 2, part of the endless belt 7 of the elevator assembly 1 is shown without any cover 10. The pair of arms 9 delimiting the vial holding recesses 8 can for example be embodied as two-teethed forks 12 which can be fixedly mounted to the endless belt 7. The endless belt 7 can preferably include a toothed belt. The two-teethed forks 12 can then be fixedly attached, for example by screws 13 or by any other known fixation means, onto a tooth of the toothed belt. These two-teethed forks 12 can for example be made of a suitable plastic, such as for example in polyoxymethylene known as POM or acetal, or for example in a high density polyethylene such as HDPE1000 but can also be made of any other suitable material. The vial holding recesses 8 are configured to receive the vials laterally. The vials 2 can be pushed laterally into the vial holding recesses 8, preferably without any effort, such that the vials 2 are hanging in the vial holding recesses 8 rather than being wedged into them. Since the vials 2 need to be inserted into the vial holding recesses 8, a relatively good synchronization of a vial supply and of the endless belt 7 may be needed. Thereto, the elevator assembly 1 can further comprise a star wheel 14 including a plurality of vial guiding recesses 15 configured to guide vials 2 into of the vial holding recesses 8. Such a star wheel 14 can be made compatible with different types of vial conveyor systems configured to convey and supply vials to the elevator assembly. The elevator assembly can additionally comprise a chicane 20 which may configured to sort out and do away with vials which may have been overturned in and/or by the preceding conveyor system and which might hamper the functioning of the present elevator assembly 1. Other types or variations of vial insertion mechanisms may be used, such as for example a wedge or guiding side walls as will be known to the person skilled in the art.

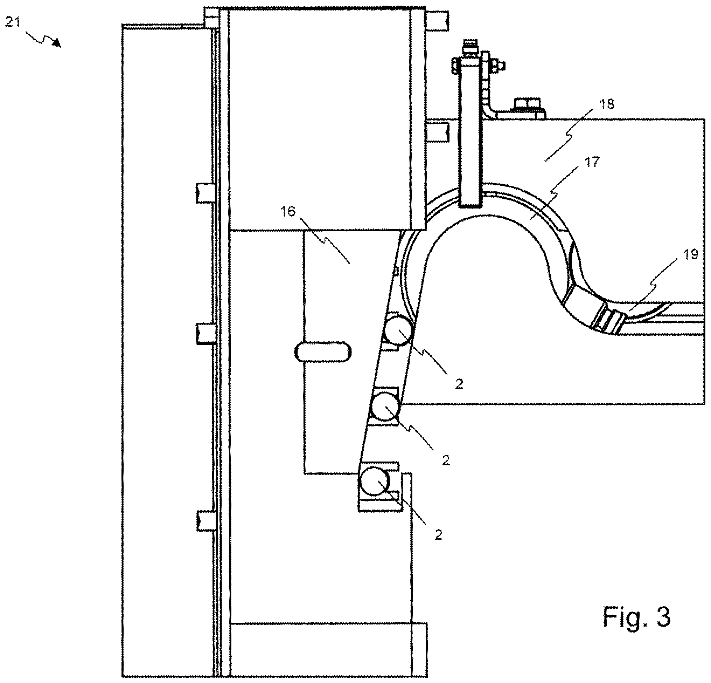

Figure 3 shows a top view on an exit assembly 21 of the elevator assembly shown in Figure 1. The elevator assembly can further comprise a wedge 16 configured to guide the vials 2 out of the vial holding recesses 8. The wedge 16 may just be a passive piece mounted along the trajectory of the vials 2 in the elevator assembly, of which a shape can be made such that the vials 2 can be guided alongside the wedge 16 out of the vial holding recesses 8. Other exit assemblies, for example active assemblies, configured to push the vials out of the vial holding recesses 8 may be possible as well. In the present embodiment the wedge 16 can guide and push the vials out of the vial holding recesses and onto a transfer wheel 17. The rotation of the transfer wheel 17 in combination with guiding side walls 18 can transfer the vials 2 from the elevator assembly 1 onto a vial conveyor system 19 of any known type, preferably onto a conveyor system in which vials are carried by a string, which can also reduce dust production during use.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. Elevator assembly for a vial conveyor system wherein the elevator assembly is configured to convey vials from a first level to a second level, the elevator assembly comprising an endless belt configured to move along an at least partially inclined or substantially vertical trajectory between the first level and the second level, wherein the endless belt includes a plurality of vial holding recesses, each recess being configured to hold a single vial in a hanging way.

2. Elevator assembly according to claim 1, wherein a width of the vial holding recesses is larger than a minimal diameter of the vial and smaller than a maximal diameter of the vial.

3. Elevator assembly according to any of the preceding claims, wherein the vial holding recesses are at a distance of one another, the distance being such that vials hanging in adjacent vial holding recesses remain at a distance of one another in a bend of the endless belt trajectory.

4. Elevator assembly according to any of the preceding claims, comprising at least two pulleys around which the endless belt is configured to rotate, wherein the pulleys are configured to rotate in a substantially vertical plane.

5. Elevator assembly according to any of the preceding claims, wherein the endless belt includes a toothed belt.

6. Elevator assembly according to any of the preceding claims, wherein the vial holding recesses are configured to receive the vials laterally.

7. Elevator assembly according to any of the preceding claims, wherein the endless belt includes at least one pair of sideward protruding arms such that said pair of arms delimit the vial holding recess.

8. Elevator assembly according to any of the preceding claims, comprising a cover configured to enclose the endless belt, wherein the plurality of vial holding recesses protrude sideward from the cover.

9. Elevator assembly according to any of the preceding claims, comprising a wedge configured to guide the vials into or out of the vial holding recesses.

10. Elevator assembly according to any of the preceding claims, comprising a star wheel including a plurality of vial guiding recesses configured to guide vials into or out of the vial holding recesses.

11. Method to elevate vials from a first level to a second level in a vial conveyor system, the method comprising the steps of
- providing an elevator assembly comprising an endless belt configured to move along an at least partially inclined or substantially vertical trajectory between the first level and the second level, wherein the endless belt includes a plurality of vial holding recesses;
- hanging a vial into at least one of the plurality of vial holding recesses.

12. Method according to claim 11, wherein the vials are inserted laterally into the plurality of vial holding recesses.

13. Method according to any of the preceding claims 11-12, wherein a star wheel receives the vials and is synchronized with the endless belt to insert the vials into the vial holding recesses of the elevator assembly.

14. Method according to any of the preceding claims 11-13, wherein a wedge guides the vials out of the vial holding recesses.
